# FASCICULE DE BREVET EUROPEEN

(11) **EP 1 362 278 B1**
(45) Date de publication et mention de la délivrance du brevet: **25.11.2009**
(21) Numéro de dépôt: 02704823.0
(22) Date de dépôt: 13.02.2002
(51) Int. Cl.: G06F 1/16, F16B 5/00

(54) **DISPOSITIF DE LIAISON AMOVIBLE ENTRE DEUX ELEMENTS**
VORRICHTUNG ZUR BEWEGLICHEN VERBINDUNG ZWISCHEN ZWEI ELEMENTEN
DEVICE FOR DETACHABLE CONNECTION BETWEEN TWO ELEMENTS

(30) Priorité: 13.02.2001 FR 0101918
(43) Date de publication de la demande: 19.11.2003
(73) Titulaire: SAGEM Sécurité, 75015 Paris (FR)
(72) Inventeur: LALLEMANT, Jean-François, F-78600 Le Mesnil le Roi (US)
(74) Mandataire: Bloch, Gérard
(86) Numéro de dépôt international: PCT/FR2002/000557
(87) Numéro de publication internationale: WO 2002/065260

(56) Documents cités:
- EP-A- 0 432 376
- GB-A- 2 291 687
- US-A- 5 428 350
- US-A- 5 927 997

## Description

Le secteur technique de la présente invention est celui des dispositifs de liaison entre deux éléments, en particulier entre un écran et son support.

Les ensembles informatiques tels les ordinateurs portables ou les scanners, et notamment les scanners de lecture de tickets de jeu sont constitués par un boîtier sur lequel est fixé un écran. Ce dernier s'ouvre souvent en tournant autour d'un axe de rotation solidaire du boîtier. Un des principaux inconvénients de cette liaison est qu'elle est indémontable, rendant l'écran inamovible par rapport au boîtier. La conséquence de cette inamovibilité est que lors d'une intervention de maintenance préventive ou corrective, il est nécessaire d'emporter l'ensemble complet alors que bien souvent le défaut se situe au niveau de l'un ou de l'autre mais rarement sur les deux. De plus, cette inamovibilité oblige les opérateurs de maintenance à transporter des ensembles complets (boîtier et écran) et donc à manipuler des volumes importants de matériels.

Le but de la présente invention est donc de pallier les inconvénients décrits ci-dessus principalement en rendant amovible de manière simple et rapide un écran par rapport à un boîtier.

Le document US 5927 997 décrit un dispositif de liaison amovible entre un écran et un boîtier.

L'invention a donc pour objet un dispositif de liaison amovible entre un premier élément et un second élément, tel que défini dans la revendication indépendante 1.

Avantageusement, le berceau délimite un espace de réception dans lequel est inséré le moyen de connexion.

Selon une caractéristique de l'invention, le berceau délimite une paroi de réception des moyens de retenue.

Selon une autre caractéristique, les moyens de retenue délimite une fourche à deux branches entre lesquelles la paroi de réception est engagée, une branche étant munie d'un tourillon coopérant avec la paroi de réception pour assurer la rotation du moyen de connexion par rapport au berceau.

Selon encore une autre caractéristique, la paroi de réception présente un profil complémentaire de celle du tourillon.

Selon encore une autre caractéristique, la paroi de réception et la fourche sont mutuellement en butée lorsque les deux éléments sont en position encliquetée.

Avantageusement, le moyen flexible est constitué par une paroi souple élastique munie le long de son bord libre d'une encoche destinée à coopérer avec un ergot délimité par le berceau.

Selon encore une autre caractéristique de l'invention, le second élément est articulé par rapport au moyen de connexion.

Selon encore une caractéristique, le second élément comporte une paroi en arc de cercle coopérant avec une paroi complémentaire du berceau définissant un logement dans lequel s'engage ladite paroi pour limiter le débattement du second élément par rapport au premier.

Le premier élément peut être représenté par un boîtier d'un appareil électronique et le second élément par un écran connecté à cet appareil.

Le dispositif peut comprendre un moyen de réglage de l'inclinaison de l'écran par rapport au boîtier, ce moyen de réglage étant avantageusement constitué par une béquille coopérant avec un support multiposition.

Un tout premier avantage du dispositif selon l'invention réside dans la facilité et la rapidité de désolidarisation d'un écran par rapport au boîtier.

Un autre avantage réside dans la simplification des interventions de maintenance ainsi qu'une baisse de leurs coûts.

D'autres caractéristiques, détails et avantages de l'invention ressortiront plus clairement à la lecture de la description donnée ci-après à titre indicatif en relation avec des dessins dans lesquels :
- la figure 1 est une représentation schématique du dispositif de liaison entre deux éléments selon l'invention,
- la figure 2 est une coupe selon A-A de la figure 1,
- la figure 3 est une vue en coupe, selon B-B, et éclatée illustrant la structure des deux éléments,
- la figure 4 est une vue montrant le positionnement initial du berceau et du moyen de connexion,
- les figures 5 et 6 sont des vues illustrant le dispositif en cours d'accrochage et encliquetage et,
- la figure 7 est une vue en coupe illustrant un moyen de réglage de l'inclinaison du second élément.

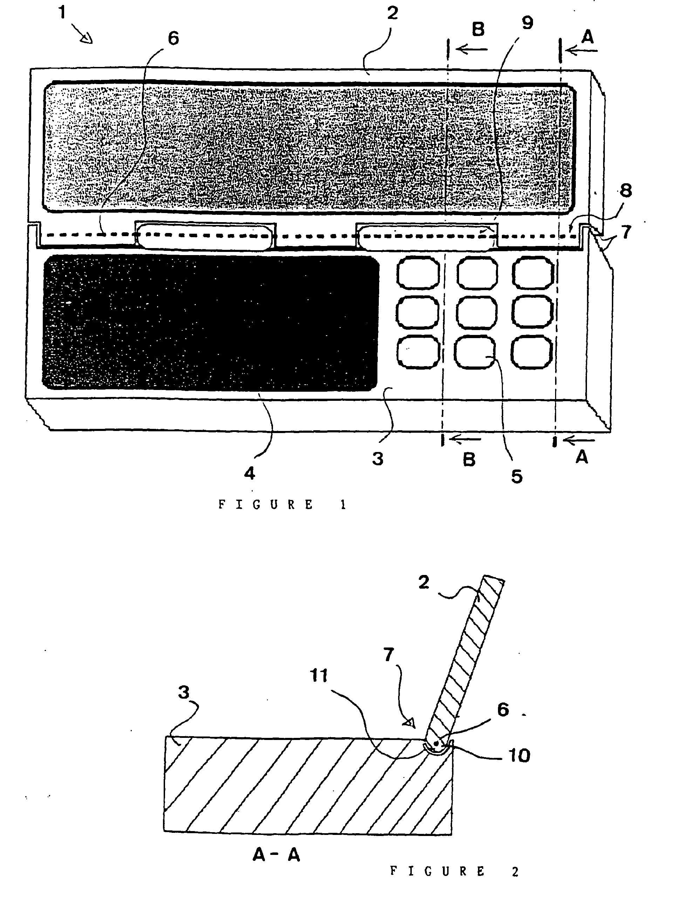

Comme indiqué précédemment, le dispositif selon l'invention permet de relier de manière amovible deux éléments entre eux, et, ce, avec une articulation de l'un par rapport à l'autre. En effet, dans bon nombre d'applications, il est très utile de pouvoir désolidariser de manière rapide deux parties d'un ensemble électronique ou mécanique de manière à pouvoir les séparer lorsqu'on souhaite intervenir sur une de celles-ci. Ainsi, le premier élément peut être dans la pratique, et afin de clarifier l'intérêt de l'invention, un boîtier électronique d'une machine et, le second élément, un écran connecté à celui-ci. On a représenté sur la figure 1 un dispositif de liaison 1 sous une forme schématique mettant en évidence l'articulation d'un second élément ou écran 2 par rapport à un premier élément ou boîtier 3. Ce boîtier peut supporter par exemple un scanner 4 et un clavier 5 pour une utilisation comme lecteur de tickets de jeu par un buraliste dans une application très particulière de l'invention. Bien entendu, ce boîtier 3 peut supporter tous les éléments nécessaires à toute forme d'utilisation envisageable par le constructeur. L'écran 2, de type LCD, couleur, à matrice active ou autre, s'articule autour d'un axe de rotation 6 par rapport au boîtier. Le dispositif de liaison présente, au niveau du bord 7 commun entre le boîtier 3 et l'écran 2, au moins un plot de rotation 8 et au moins une liaison amovible 9.

La figure 2 met en évidence pour plus de clarté la conception du plot de rotation 8. Celui-ci est constitué classiquement par un tourillon 10 de forme générale cylindrique solidaire du bord de l'écran 2. Ce tourillon 10 est complémentaire d'un évidement 11 pratiqué dans le boîtier 3. De manière similaire, l'évidement pourrait être pratiqué dans l'écran en regard d'un tourillon sortant du boîtier.

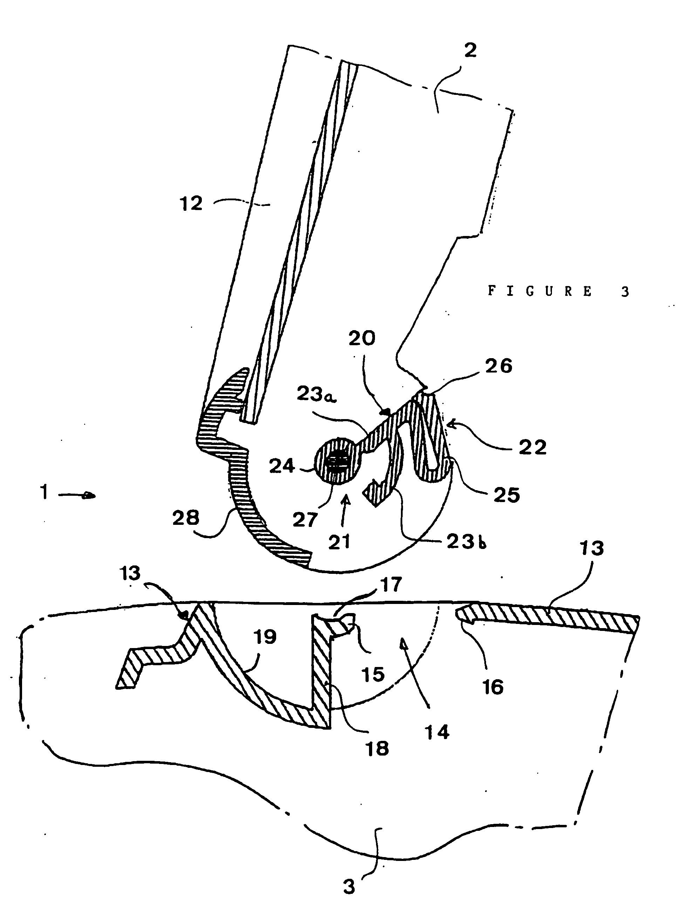

La figure 3 est une vue en coupe selon B-B illustrant plus particulièrement la constitution du dispositif de liaison amovible 1. Le second élément ou écran 2 est représenté partiellement, la face avant 12 de celui-ci étant orientée vers un utilisateur. Le premier élément 3 ou boîtier est également représenté partiellement. Les éléments 2 et 3 sont montrés en position déconnectée pour faciliter la compréhension.

Le boîtier 3 est muni d'un berceau 13 qui définit un espace de réception 14 délimitant une paroi de réception 15 et un ergot 16. La paroi 15 présentant un profil semi-cylindrique 17 orienté vers l'écran 2 et est prolongée par une paroi longitudinale 18 et une paroi 19 en arc de cercle.

Le second élément ou écran 2 est prolongé sur le dessin dans sa partie inférieure par un moyen de connexion 20 constitué des moyens de retenue 21 et d'un moyen flexible 22. Les moyens de retenue délimitent une fourche à deux branches 23a et 23b entre lesquelles la paroi 15 est amenée à s'engager. La branche 23a est munie d'un tourillon 24 destiné à coopérer avec la paroi 15 pour assurer la rotation du moyen de connexion 21 par rapport au berceau 13. Bien entendu, la paroi de réception 15 présente un profil complémentaire à celui du tourillon 24. Le moyen flexible 22 est constitué par une paroi souple élastique 25 prolongeant les deux branches 23 sous la forme d'une boucle et munie le long de son bord libre d'une encoche 26 destinée à coopérer avec l'ergot 16 du berceau.

Sur la figure, on voit que le tourillon 24 supporte un axe 27 permettant la rotation de l'écran par rapport au moyen de connexion 21. L'écran 2 est muni de manière complémentaire d'une jupe 28 en prolongement de sa face avant se terminant en arc de cercle selon un profil correspondant à celui de la paroi 19 du berceau.

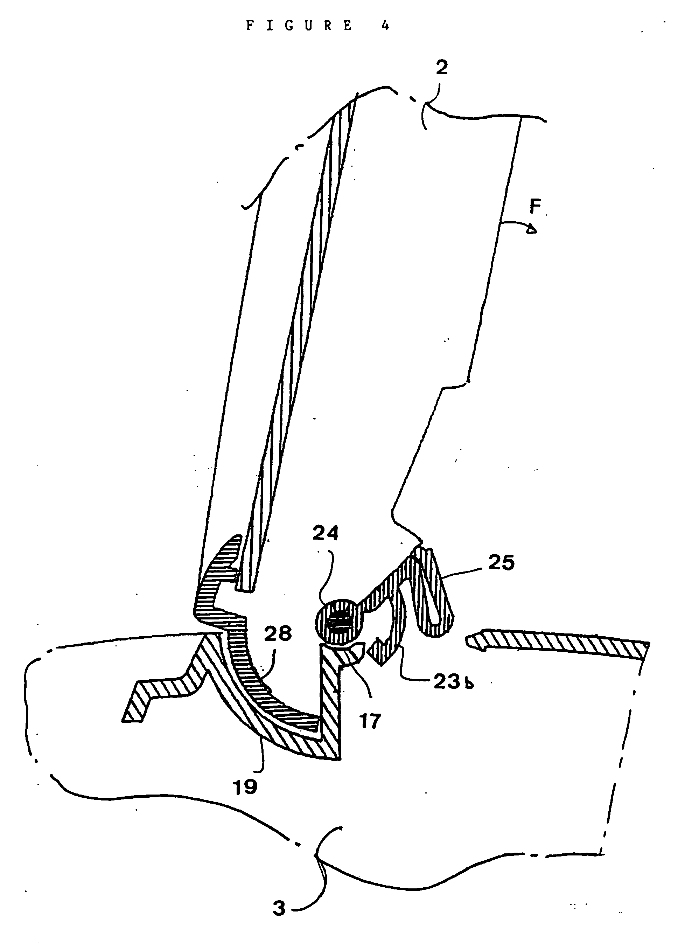

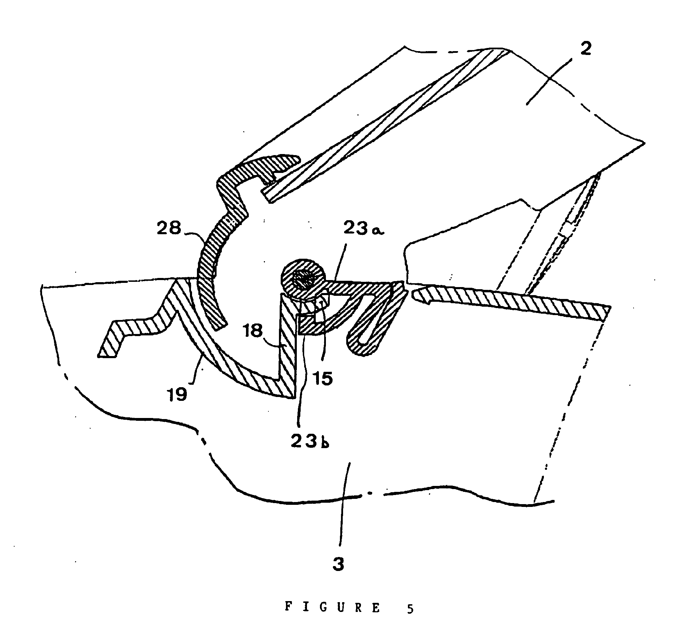

Pour solidariser l'écran 2 et le boîtier 3 on s'y prend de la manière suivante. On place l'écran 2 au-dessus du boîtier 3 comme montré sur la figure 3 et on engage le moyen de connexion 20 dans l'espace libre 14 en plaçant le tourillon 24 sur la surface 17. Dans cette position représentée sur la figure 4, la jupe 28 vient se positionner contre la paroi 19 en concordance de leur forme. Dans cette position, l'écran est en butée contre le boîtier par application de la jupe 28 contre la paroi 19. Sur cette figure, on a représenté la paroi élastique 25 en position de précontrainte par pincement de la boucle escamotée par rapport au berceau. La liaison de l'écran 2 avec le boîtier 3 se fait en imprimant un mouvement de rotation à l'écran suivant la flèche F après une première rotation représentée sur la figure 5. L'introduction du moyen de connexion dans l'espace 14 du berceau provoque d'une manière générale le centrage de l'écran 2 par rapport au boîtier 3 et plus particulièrement le centrage du tourillon 24 sur la surface 17. Cette limitation est conçue de manière nécessaire et suffisante pour permettre l'engagement complet ou le dégagement de l'écran par rapport au boîtier. Le débattement de l'écran par rapport au boîtier est ainsi limité.

Dans la position semi-encliquetée représentée sur la figure 5, on voit que la paroi de réception 15 et la fourche 23 sont mutuellement en butée. Dans cette position, le bras 23a de la fourche est en appui sur la paroi 15 tandis que l'autre bras 23b de la fourche vient en appui sur la paroi 18. Le moyen de connexion 20 est donc en position de blocage et ne peut pas être séparé du berceau et le verrouillage de l'écran 2 peut donc intervenir.

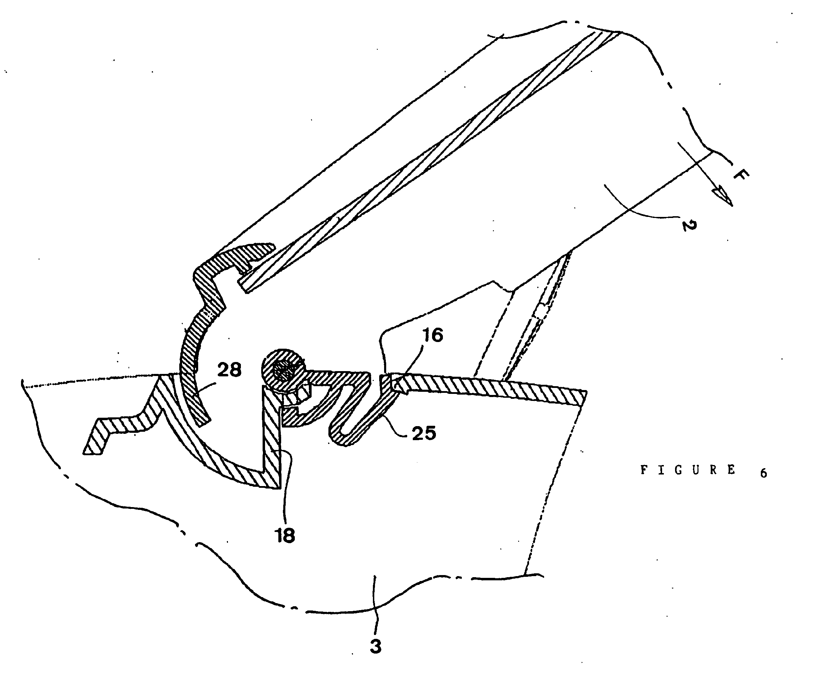

Ce verrouillage complet est représenté sur la figure 6 montre l'écran 2 totalement solidarisé au boîtier 3. Pour cela, la paroi flexible 25 est relachée et elle vient s'accrocher sur l'ergot 16 du berceau 13. On peut en variante provoquer l'effacement de la paroi flexible qui par rotation de l'écran vient prendre appui sur l'ergot jusqu'à son effacement.

Lorsque le moyen de connexion est verrouillé l'écran 2 peut tourner librement entre la position finale représentée sur la figure 6 par rotation autour de l'axe 27 et une position initiale (non représentée) dans laquelle la jupe 28 vient en butée contre la paroi 18.

Pour séparer l'écran 2 du boîtier 3, on commence, suivant la figure 6, d'abord par effacer l'encoche 26 de la paroi flexible 25 afin de la dégager de l'ergot 16. On fait tourner ensuite l'écran dont la rotation dans le sens inverse de la flèche F entraîne le moyen de connexion 20 qui émerge alors de l'espace 14 en occupant la position représentée sur la figure 4. Il ne reste plus qu'à extraire l'écran en le soulevant pour le dégager du berceau comme montré sur la figure 3. Il suffit ensuite de déconnecter le cablâge de l'écran pour séparer totalement l'écran du boîtier et intervenir sur le boîtier ou remplacer cet écran.

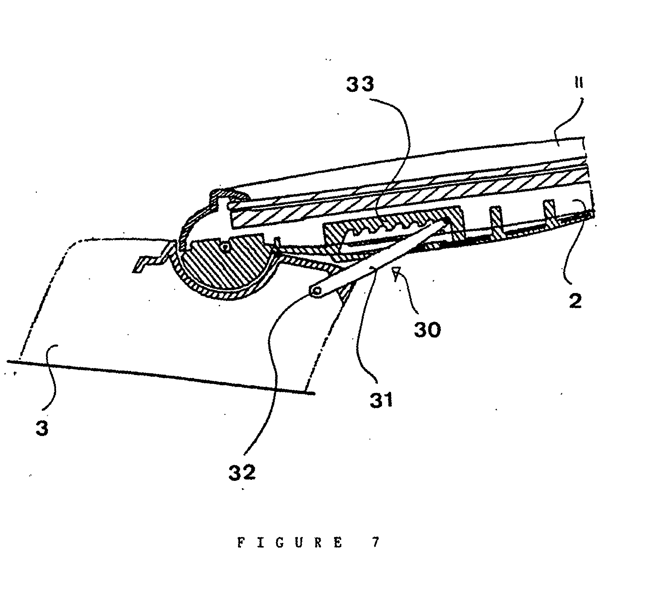

La figure 7 montre le moyen de réglage 30 de l'inclinaison de l'écran 2 par rapport au boîtier 3. Celui-ci est constitué par une béquille 31 reliée par une de ses extrémités au boîtier 3 par l'intermédiaire d'un axe 32. Cette liaison autorise la rotation de la béquille 30 autour de l'axe 32. L'extrémité opposée de la béquille 31 est en appui dans un support multi-position 33 solidaire de l'écran 2. Le positionnement de la béquille 31 par rapport au support multi-position 33 permet de faire varier l'inclinaison de l'écran 2 par rapport au boîtier 3. Le décrochage de l'écran n'est pas gêné par ce moyen de réglage 30 car la béquille 31 est seulement en appui dans des encoches pratiquées dans le support multi-position 33 et peut être aisément décrochée.

## Revendications

1. Dispositif (1) de liaison amovible entre un premier élément (3) et un second élément (2) articulés l'un à l'autre autour d'un axe de rotation (6), ledit dispositif comprenant un berceau (13) de réception délimité par le premier élément (3), d'une part et un moyen de connexion (20) solidaire du second élément (2), d'autre part, **caractérisé par le fait que** ledit moyen (20) est relié au berceau (13) d'un côté par des moyens de retenue (21) et, de l'autre, par un moyen flexible (22) effaçable pour permettre la séparation des deux éléments, le moyen de connexion (20) étant agencé pour être entrainé en rotation autour ledit axe de rotation pour solidariser et séparer les deux éléments.

2. Dispositif de liaison amovible selon la revendication 1, dans lequel le berceau (13) délimite un espace de réception (14) dans lequel est inséré le moyen de connexion (20).

3. Dispositif de liaison amovible selon la revendication 1 ou 2, dans lequel le berceau (13) délimite une paroi (15) de réception des moyens de retenue (21).

4. Dispositif de liaison amovible selon l'une des revendications là 3, dans lequel les moyens de retenue (21) délimite une fourche à deux branches (23a, 23b) entre lesquelles la paroi de réception (15) est engagée.

5. Dispositif de liaison amovible selon la revendication 4, dans lequel une branche (23a) est munie d'un tourillon (24) coopérant avec la paroi de réception (15) pour assurer la rotation du moyen de connextion (20) par rapport au berceau (13).

6. Dispositif de liaison amovible selon la revendication 5, dans lequel la paroi de réception (15) présente un profil (17) complémentaire de celle du tourillon (24).

7. Dispositif de liaison amovible selon la revendications 6, dans lequel la paroi de réception (15) et la fourche (23) sont mutuellement en butée lorsque les deux éléments (2, 3) sont en position encliqueté.

8. Dispositif de liaison amovible selon la revendication 7, dans lequel le moyen flexible (22) est constitué par une paroi souple (25) élastique munie le long de son bord libre d'une encoche (26) destinée à coopérer avec un ergot (16) délimité par le berceau (13).

9. Dispositif de liaison amovible selon l'une des revendications 1 à 8, dans lequel le second élément (2) est articulé par rapport au moyen de connexion (20).

10. Dispositif de liaison amovible selon la revendication 9, dans lequel le second élément (2) comporte une paroi (19) en arc de cercle coopérant avec une paroi complémentaire (28) du berceau définissant un logement dans lequel s'engage ladite paroi pour limiter le débattement du second élément par rapport au premier.

11. Dispositif de liaison amovible selon l'une des revendications 1 à 10, dans lequel le premier élément (3) est représenté par un boîtier électronique et le second élément (2) un écran connecté à cet appareil.

12. Dispositif de liaison amovible selon la revendication 11, dans lequel il est prévu un moyen (30-33) de réglage de l'inclinaison de l'écran (2) par rapport au boîtier (3).

13. Dispositif de liaison amovible selon la revendication 12, dans lequel le moyen (30-33) de réglage comprend une béquille (31) coopérant avec un support multiposition (33).

## Claims

1. A device (1) for removably linking a first element (3) and a second element (2) hinged to each other about an axis of rotation (6), said device comprising a receiving cradle (13) bounded by the first element (3), on the one hand, and a connection means (20) integral with the second element (2), on the other hand, **characterised in that** said means (20) is connected to the cradle on one side by retaining means (21) and on the other side, by an erasable flexible means (22) for enabling the separation of both elements, the connection means (20) being arranged to be rotatably driven about said axis of rotation for securing and separating both elements.

2. The device for removably linking according to claim 1, wherein the cradle (13) bounds a receiving space (14) in which is inserted the connecting means (20).

3. The device for removably linking according to claim 1 or 2, wherein the cradle (13) bounds a receiving wall (15) for receiving the retaining means (21).

4. The device for removably linking according to any of claims 1 to 3, wherein the retaining means (21) bounds a fork with two tines (23a, 23b), the receiving wall (15) being engaged therebetween.

5. The device for removably linking according to claim 4, wherein a tine (23a) is provided with a journal (24) cooperating with the receiving wall (15) for providing rotation of the connection means (20) with respect to the cradle (13).

6. The device for removably linking according to claim 5, wherein the receiving wall (15) has a profile (17) which is complementary to the profile of the journal (24).

7. The device for removably linking according to claim 6, wherein the receiving wall (15) and the fork (23) are abutting against each other when both elements (2, 3) are in a snapped position.

8. The device for removably linking according to claim 7, wherein the flexible means (22) is made of an elastic flexible wall (25) provided along the free edge thereof with a notch (26) for cooperating with a lug (16) bounded by the cradle (13).

9. The device for removably linking according to any of claims 1 to 8, wherein the second element (2) is hinged with respect to the connection means (20).

10. The device for removably linking according to claim 9, wherein the second element (2) comprises an arc of a circle-shaped wall (19) cooperating with a wall (28) which is complementary to the cradle defining a housing in which is engaged said wall for limiting clearance of the second element with respect to the first element.

11. The device for removably linking according to any of claims 1 to 10, wherein the first element (3) is represented by an electronic package and the second element (2) by a display screen connected to this apparatus.

12. The device for removably linking according to claim 11, wherein a means (30-33) is provided for setting tilting of the display screen (2) with respect to the package (3).

13. The device for removably linking according to claim 12, wherein the setting means (30-33) comprises a stand (31) cooperating with a multi-position support (33).

## Patentansprüche

1. Vorrichtung (1) zur abnehmbaren Verbindung zwischen einem ersten Element (3) und einem zweiten Element (2), die aneinander um eine Drehachse (6) herum angelenkt sind, wobei die Vorrichtung einerseits eine Aufnahmehalterung (13), die von dem ersten Element (3) begrenzt wird, und andererseits ein Anschlussmittel (20), das mit dem zweiten Element (2) einstückig ist, umfasst,
**dadurch gekennzeichnet, dass** das Mittel (20) mit der Halterung (13) verbunden ist, einerseits durch Haltemittel (21) und andererseits durch ein biegsames Mittel (22), das zurücknehmbar ist, um die Trennung der beiden Elemente zu ermöglichen, wobei das Verbindungsmittel (20) angeordnet ist, um um die Drehachse herum mit gedreht zu werden, um die beiden Elemente fest zu verbinden oder zu trennen.

2. Vorrichtung zur abnehmbaren Verbindung nach Anspruch 1, wobei die Halterung (13) einen Aufnahmeraum (14) begrenzt, in den das Anschlussmittel (20) eingefügt wird.

3. Vorrichtung zur abnehmbaren Verbindung nach Anspruch 1 oder 2, wobei die Halterung (13) eine Wand (15) zur Aufnahme der Haltemittel (21) begrenzt.

4. Vorrichtung zur abnehmbaren Verbindung nach einem der Ansprüche 1 bis 3, wobei die Haltemittel (21) eine Gabel mit zwei Schenkeln (23a, 23b) begrenzen, zwischen denen die Aufnahmewand (15) in Eingriff gebracht wird.

5. Vorrichtung zur abnehmbaren Verbindung nach Anspruch 4, wobei ein Schenkel (23a) mit einem Lagerzapfen (24) versehen ist, der mit der Aufnahmewand (15) zusammenwirkt, um die Drehung des Anschlussmittels (20) im Verhältnis zur Halterung (13) sicherzustellen.

6. Vorrichtung zur abnehmbaren Verbindung nach Anspruch 5, wobei die Aufnahmewand (15) ein Profil (17) aufweist, welches das des Lagerzapfens ergänzt.

7. Vorrichtung zur abnehmbaren Verbindung nach Anspruch 6, wobei die Aufnahmewand (15) und die Gabel (23) gegenseitig im Anschlag liegen, wenn die beiden Elemente (2, 3) sich in der eingerasteten Position befinden.

8. Vorrichtung zur abnehmbaren Verbindung nach Anspruch 7, wobei das biegsame Mittel (22) aus einer nachgiebigen elastischen Wand (25) besteht, die an ihrem freien Ende entlang mit einem Einschnitt (26) versehen ist, der dazu gedacht ist, mit einem Ansatz (16) zusammenzuwirken, der von der Halterung (13) begrenzt wird.

9. Vorrichtung zur abnehmbaren Verbindung nach einem der Ansprüche 1 bis 8, wobei das zweite Element (2) im Verhältnis zum Anschlussmittel (20) angelenkt ist.

10. Vorrichtung zur abnehmbaren Verbindung nach Anspruch 9, wobei das zweite Element (2) eine kreisbogenförmige Wand (19) umfasst, die mit einer ergänzenden Wand (28) der Halterung zusammenwirkt, indem sie eine Aufnahme definiert, in welche die Wand eingreift, um den Spielraum des zweiten Elements im Verhältnis zum ersten zu begrenzen.

11. Vorrichtung zur abnehmbaren Verbindung nach einem der Ansprüche 1 bis 10, wobei das erste Element (3) ein elektronisches Gerät und das zweite Element (2) ein Bildschirm ist, der an dieses Gerät angeschlossen ist.

12. Vorrichtung zur abnehmbaren Verbindung nach Anspruch 11, wobei ein Mittel (30 bis 33) zum Einstellen der Neigung des Bildschirms (2) im Verhältnis zum Gehäuse (3) bereitgestellt wird.

13. Vorrichtung zur abnehmbaren Verbindung nach Anspruch 12, wobei das Einstellungsmittel (30 bis 33) eine Stütze (31) umfasst, die mit einem Mehrpositionsträger (33) zusammenwirkt.
